Europäisches Patentamt

European Patent Office

Office européen des brevets

(11) Veröffentlichungsnummer: **0 484 673 A1**

## EUROPÄISCHE PATENTANMELDUNG

(21) Anmeldenummer: **91116821.9**

(22) Anmeldetag: **02.10.91**

(51) Int. Cl.5: **B60P 3/03**

(30) Priorität: **12.10.90 DE 9014196 U**

(43) Veröffentlichungstag der Anmeldung:
**13.05.92 Patentblatt 92/20**

(84) Benannte Vertragsstaaten:
**AT BE CH DE DK ES FR GB GR IT LI LU NL SE**

(71) Anmelder: **Nukem GmbH**
**Industriestrasse 13**
**W-8755 Alzenau(DE)**

(72) Erfinder: **Colhoun, Christian**
**Dudenhöferstrasse 22a**
**W-6453 Seligenstadt(DE)**

(74) Vertreter: **Stoffregen, Hans-Herbert, Dr.**
**Dipl.-Phys.**
**Patentanwalt, Salzstrasse 11 a, Postfach 21**
**44**
**W-6450 Hanau 1(DE)**

(54) **Transportfahrzeug.**

(57) Es wird ein Transportfahrzeug (10) vorgeschlagen, das eine Fahrerkabine (14) und einen von dieser abgetrennten Transportbereich (12) umfaßt. In diesem gelagerte Gegenstände können nur über eine Schleuse (34) entnommen werden, und zwar vorzugsweise auch nur dann, wenn sich das Transportfahrzeug (10) an vorher festgelegten Orten befindet.

FIG.1

Die Erfindung bezieht sich auf ein Transportfahrzeug, insbesondere zum Transport von Wertgegenständen, umfassend einen von einer Fahrerkabine abgetrennten die Wertgegenstände aufnehmenden Transportbereich mit in diesem vorhandener Regaleinrichtung.

Im Transportwesen sollen bzw. dürfen bestimmte Güter, die z.B. wertvoll oder gefährlich sind, nur an eigens dafür vorgesehenen Orten be- und entladen werden. Zum Transport dieser Güter werden im allgemeinen spezielle Fahrzeuge mit verschließbaren Transportbereichen verwendet, die z.B. nur mittels mechanischer oder elektronischer Schlüssel geöffnet werden können. Diese Schlüssel werden vom Fahrpersonal mitgeführt. Auch besteht die Möglichkeit, daß am Be- bzw. Entladeort tätiges Personal Schlüssel zum Verschließen und Öffnen der Transportbereiche bereithält.

Aufgabe der vorliegenden Erfindung ist es, ein Transportfahrzeug der eingangs beschriebenen Art dahingehend weiterzubilden, daß nur an bestimmten Positionen ein Entladen der Gegenstände möglich ist, wobei dies unter geringstmöglichem Personaleinsatz erfolgen soll.

Die Aufgabe wird erfindungsgemäß im wesentlichen dadurch gelöst, daß der Transportbereich über eine Schleuseneinrichtung zugänglich ist und daß die Wertgegenstände in in der Regaleinrichtung einlagerbaren und über eine Fördereinrichtung auslagerbaren Behältnissen angeordnet sind.

Erfindungsgemäß wird die Möglichkeit geschaffen, ein insbesondere mit Wertgegenständen beladenes Transportfahrzeug vollautomatisch zu entladen, welches selbst über eine Schleuseneinrichtung erfolgt, so daß der Transportbereich selbst nicht zugänglich ist. Durch diese Maßnahmen ist eine erhöhte Sicherheit gegeben, so daß die Bedienung des Transportfahrzeuges nur mit einer Person erfolgen kann.

In besonders hervorzuhebender Ausgestaltung der Erfindung ist vorgesehen, daß die Schleuseneinrichtung und/oder die Fördereinrichtung in Abhängigkeit von einer bestimmten ortsabhängigen Istposition des Transportfahrzeuges aktivierbar ist.

Mit anderen Worten kann erst dann ein Entladen der Gegenstände aus dem Transportbereich erfolgen, wenn das Transportfahrzeug eine ganz bestimmte Position erreicht hat. Erst in dieser Position wird ortsgebunden und unabhängig vom Fahrpersonal oder anderen Personen die Förder- bzw. Schleuseneinrichtung aktiviert, so daß das Entladen möglich ist.

Anders ausgedrückt kann außerhalb eines vorher festgelegten und durch Signale bestimmbaren Orts ein Betätigen der Förder- bzw. Schleuseneinrichtung nicht erfolgen. Folglich ist mit diesen Maßnahmen ein erhöhter Schutz gegen eine Entwendung bzw. ungewünschtes Entladen gegeben.

Vorzugsweise bringt ein an dem vorbestimmten Ort angebrachter Geber beim Eindringen des Transportfahrzeuges in seinen Wirkungsbereich einen im Fahrzeug selbst vorhandenen Detektor zum Ansprechen, der ausgangsseitig mit Steuer- oder Stelleinrichtungen verbunden ist, über die mittelbar oder unmittelbar die Schleusen- bzw. Fördereinrichtung zum Auslagern der Gegenstände aktivierbar sind.

Nach einer weiteren Ausführungsform kann die jeweilige Position des Transportfahrzeuges mit Sensoren fortlaufend gemessen und mit im Transportfahrzeug gespeicherten Werten verglichen werden, wobei dann, wenn eine Übereinstimmung zwischen den gemessenen und vorab gespeicherten, dem vorgegebenen Ort zuzuordnenden Werten die Förder- bzw. Schleuseneinrichtung aktivierbar ist.

Bevorzugterweise stellt die Schleuseneinrichtung eine Verbindung zwischen dem Transportbereich und der Fahrerkabine her, so daß hierdurch eine zusätzliche Sicherung gegeben ist.

Um ein automatisches Auslagern der in den Behältnissen vorhandenen Gegenstände zu sichern, können die Behältnisse selbst oder die die Behältnisse aufnehmenden Bereiche mit Codierungen versehen sein. Durch den Einsatz von Absolut-Codiereinrichtungen ist eine präzise Auslagerung möglich.

Durch die Absolut-Codiereinrichtung kann berührungslos unabhängig von der zurückgelegten Strecke der Fördereinrichtung das zu entladende Behältnis festgestellt, erfaßt und ausgelagert werden. Die Auslagerungsbefehle können gleichfalls in Abhängigkeit von der Position des Transportfahrzeuges abgespeichert sein. Alternativ besteht die Möglichkeit, Auslagerungsbefehle über eine Tastatur einzugeben.

Vorzugsweise sind die Behältnisse selbst mit Strichcode-Aufklebern versehen, wodurch eine sichere Codierung gewährleistet ist. Die Fördereinrichtung selbst kann über eine speicherprogrammierbare Steuerung verfügen.

Vorzugsweise weist das Transportfahrzeug zwei entlang der Innenlängswände des Transportbereichs angeordnete Regale mit Auflagekonsolen auf, zwischen denen die Fördereinrichtung zum Erfassen der Behältnisse horizontal und vertikal bewegbar angeordnet ist.

Um ein einfaches Entnehmen der Behältnisse aus der Schleuseneinrichtung zu ermöglichen, weist diese eine für die Behältnisse geneigt verlaufende Transportebene auf, deren vorzugsweise in der Fahrerkabine verlaufender Entnahmebereich tiefer gelegen ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:

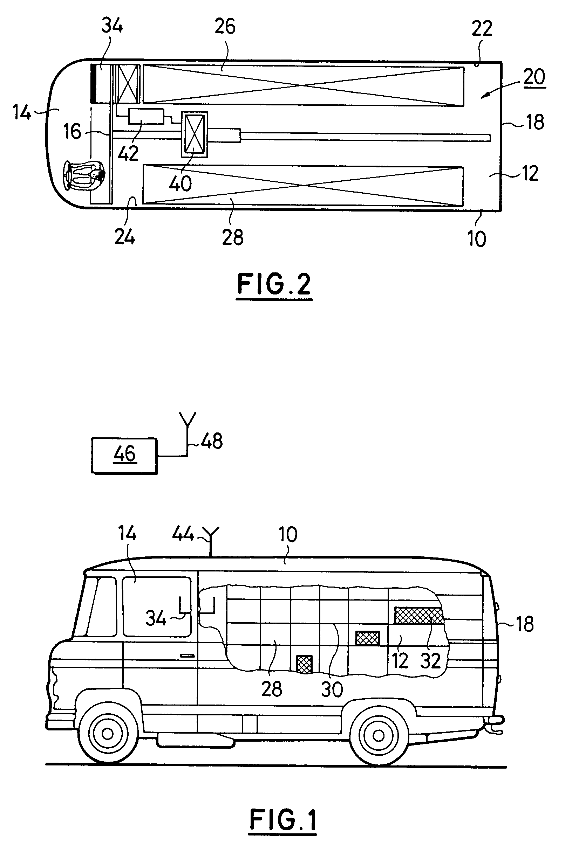

Fig. 1    ein erfindungsgemäß ausgebildetes Transportfahrzeug, teilweise weggebrochen, und

Fig. 2    einen Längsschnitt durch ein erfindungsgemäß ausgebildetes Transportfahrzeug.

In den Figuren ist rein schematisch ein Transportfahrzeug (10) dargestellt, welches in einen Transport- bzw. Lagerbereich (12) und in eine Fahrerkabine (14) unterteilt ist. Fahrerkabine (14) und Lagerbereich (12) sind durch eine im wesentlichen einbruchsichere Trennwand (16) unterteilt. Der Transportbereich (12) weist rückseitige Türen (18) auf, die grundsätzlich jedoch nur am Beladeort geöffnet werden können. Ansonsten sind diese verriegelt und wiesen gleichfalls einen Einbruch weitgehend verhindernde Festigkeit auf.

Erfindungsgemäß weist der Transportbereich (12) ein Regalsystem (20) auf, das im Ausführungsbeispiel aus zwei an den Längsinnenwandungen (22) und (24) des Transportbereichs (12) verlaufenden Regalen (26) und (28) besteht, die ihrerseits eine Vielzahl von Ablagen aufweist, die beispielhaft mit dem Bezugszeichen (30) versehen sind.

In diese Ablagen werden Behältnisse (32) abgelegt, die ihrerseits insbesondere Wertgegenstände aufnehmen.

Zwischen den Regalen (26) und (28) ist eine Fördereinrichtung (40) angeordnet, welche über bekannte Zieh-und Schiebetechniken im gewünschten Umfang die Aufnahmen (30) und die daran befindlichen Behältnisse (32) erfassen und einer Schleuseneinrichtung (34) zuführen kann, die ihrerseits eine Verbindung zwischen dem Transportbereich (12) und der Fahrerkabine (14) herstellt.

Um ein automatisches Auslagern der Behältnisse (32) an gewünschten, vorzugsweise vorher festlegbaren Positionen des Transportfahrzeuges (10) zu ermöglichen, ist eine Aktivierung der angesprochenen Einrichtungen durch Signale möglich, die dem gewünschten Ort eindeutig zuordbar sind. Hierzu kann das Transportfahrzeug (10) einen Detektor (42) aufweisen, der eingangsseitig an eine Antenne (44) und ausgangsseitig mit der Fördereinrichtung (40) bzw. der Schleuseneinrichtung (34) verbunden ist.

An dem Ort, an dem zum Auslagern der Behältnisse (32) die Fördereinrichtung (40) und die Schleuseneinrichtung (34) aktivierbar sein sollen, befindet sich ein Positionsmelder (46) in Form eines Senders oder eines Transponders und einer Antenne (48). Der Positionsmelder (46) sendet entweder laufend oder nach Aktivierung durch codierte Signale vom Transportfahrzeug (10) codierte Signale aus, auf die der Detektor (42) anspricht, wenn sich das Transportfahrzeug (10) im Empfangsbereich des Positionsmelders (46) befindet, der eine begrenzte Reichweite und/oder Richtwirkung zeigt. Wenn der Detektor (42) anspricht, gibt er ein Steuersignal an die Fördereinrichtugn (40) bzw. die Schleuseneinrichtung (34) ab, wodurch diese aktiviert werden.

Ein Auslagern der Behältnisse (32) kann folglich nur im Sendebereich des Positionsmelders (46) erfolgen, dessen Sendebereich auf die unmittelbare Nähe des Ortes abgestimmt ist, im Bereich dessen das Entladen erfolgen soll. Auf diese Weise ist sichergestellt, daß der einbruchgesicherte wie gepanzerte Transportraum (12) nur am oder in einem vorbestimmten Ort wie Gebäude geöffnet werden kann.

Damit an einem bestimmten Ort nur gewünschte Behältnisse (32) abgeladen werden können, sind an diesen oder an den diese aufnehmenden Regalbereichen (30) Codierungen wie Barcodes vorgesehen, die von der Fördereinrichtung (40) zugeordneten Sensoren abgetastet bzw. gelesen werden. Die zu entladenden Behältnisse (32) werden von den Bereichen (30) der Regale (26) bzw. (28) entnommen und in die Schleuseneinrichtung (34) gegeben, durch die sie in das Führerhaus (14) des Transportfahrzeuges (10) gelangen. Hierzu kann die Transportebene für die Behältnissse (32) in der Schleuseneinrichtung (34) geneigt sein.

Die Schleuseneinrichtung (34) ist vorzugsweise derart ausgelegt, daß stets nur ein Behältnis (32) aufgenommen werden kann. Hierdurch ist eine zusätzliche Sicherung gegeben. Ferner kann über Sensoren die Fördereinrichtung (40) derart gesteuert werden, daß nur dann ein Behältnis (32) der Schleuse (34) zugeführt werden kann, wenn diese leer ist.

Auch wenn grundsätzlich ein automatischer Betrieb der Regalfördereinrichtung (40) in Abhängigkeit von über den Detektor (42) und einen gegebenenfalls nachgeschalteten Rechner kommenden Signalen erfolgt, so kann gegebenenfalls auch ein halbautomatischer Betrieb dahingehend erfolgen, daß die Aktivierung der Fördereinrichtung (40) bzw. der Schleuseneinrichtung (34) zwar in Abhängigkeit von den positionsgebundenen freigebenden Signalen des Detektors (42) vorgenommen wird, jedoch das Auslagern, also das Betätigen der Fördereinrichtung (40) über eine am Ort des Entladens oder im Führerhaus (14) vorhandenes von hand zu bedienendes Steuerterminal gesteuert wird. Gegebenenfalls ist sogar ein paralleler Betrieb möglich, nämlich dann, wenn z.B. bei der Ausbildung des Transportfahrzeuges als Geldtransporter bei unvorhergesehenem Geldbedarf mehr als zunächst geplante Geldmengen entladen werden sollen.

Selbstverständlich kann die Schleusen- und Regaleinrichtung auch zur Einlagerung von leeren und vollen Behältern benutzt werden.

Ferner besteht die Möglichkeit, daß die Regale durch die hinteren Türen von Hand beladen und entladen werden können und daß die gesamte Lagereinrichtung mit Fördereinrichtung oder auch nur die Regale schnell und einfach (leer oder beladen) über die hinteren Türen ein- und ausgeladen werden können. Durch ein Ein- und Ausladen voller Regale können kurze Fahrzeugrüstzeiten erreicht werden.

Die Position von wahllos eingelagerten Behältnissen in den Regalen wird durch einen eigenen Schritt "Behältnispositionen lesen" erkannt und gespeichert.

**Patentansprüche**

1. Transportfahrzeug (10) für Gegenstände, insbesondere Wertgegenstände, umfassend einen von einer Fahrerkabine (14) abgetrennten die Gegenstände aufnehmenden Transportbereich (12) mit in diesem vorhandener Regaleinrichtung (20),
   **dadurch gekennzeichnet**,
   daß die Gegenstände in in der Regaleinrichtung (20) eingelagerten und über eine Fördereinrichtung (40) auslagerbaren Behältnissen (32) angeordnet sind, wobei der Transportbereich (12) über eine die Behältnisse übergebende Schleuseneinrichtung (34) zugänglich ist.

2. Transportfahrzeug nach Anspruch 1,
   **dadurch gekennzeichnet**,
   daß die Schleuseneinrichtung (34) eine Verbindung zwischen dem Transportbereich (12) und der Fahrerkabine (14) bildet.

3. Transportfahrzeug nach Anspruch 1,
   **dadurch gekennzeichnet**,
   daß die vorzugsweise automatisierte Schleuseneinrichtung (34) in Abhängigkeit von einer bestimmten ortsabhängigen Position des Transportfahrzeuges (10) aktiviert ist.

4. Transportfahrzeug nach Anspruch 1,
   **dadurch gekennzeichnet**,
   daß die Fördereinrichtung (40) in Abhängigkeit von einer bestimmten ortsabhängigen Position des Transportfahrzeuges (10) aktiviert ist.

5. Transportfahrzeug nach zumindest einem der vorhergehenden Ansprüche,
   **dadurch gekennzeichnet**,
   daß das Transportfahrzeug (10) zum Aktivieren der Schleuseneinrichtung (34) und/oder der Fördereinrichtung (40) einen für bestimmte Positionen des Transportfahrzeuges (10) typische Signale überwachenden Detektor (42) aufweist.

6. Transportfahrzeug nach zumindest einem der vorhergehenden Ansprüche,
   **dadurch gekennzeichnet**,
   daß die die Gegenstände aufnehmenden Behältnisse (32) mit Codierungen versehen sind.

7. Transportfahrzeug nach zumindest einem der vorhergehenden Ansprüche,
   **dadurch gekennzeichnet,**
   daß jedes Behältnis (32) in eine Codierung aufweisendem Abschnitte oder Fach (30) der Regaleinrichtung (20) gelagert ist.

8. Transportfahrzeug nach zumindest einem der vorhergehenden Ansprüche,
   **dadurch gekennzeichnet**,
   daß die Schleuseneinrichtung (34) eine in Richtung ihrer Entnahme geneigte Transportebene für das Behältnis (32) aufweist.

9. Transportfahrzeug nach zumindest einem der vorhergehenden Ansprüche,
   **dadurch gekennzeichnet**,
   daß die Regaleinrichtung (20) entlang der Längsseiteninnenwandungen (22, 24) des Lagerbereichs (12) des Transportfahrzeuges (10) angeordnete Regale (26, 28) aufweist, zwischen denen die die Behältnisse (32) in Zieh- und Schiebetechnik ein- und auslagerbare Fördereinrichtung (40) verläuft.

10. Transportfahrzeug (10) für Gegenstände, insbesondere Wertgegenstände, umfassend einen von einer Fahrerkabine (14) abgetrennten die Gegenstände aufnehmenden Transportbereich (12),
    **dadurch gekennzeichnet**,
    daß die Gegenstände dem Transportbereich (12) über eine Schleuseneinrichtung (34) entnehmbar sind, die ihrerseits in Abhängigkeit von einer bestimmten ortsabhängigen Position des Transportfahrzeuges (10) aktivierbar ist.

**FIG.2**

**FIG.1**

Europäisches Patentamt

EUROPÄISCHER RECHERCHENBERICHT

Nummer der Anmeldung

EP   91 11 6821

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | BE-A-900 160 (VAN POTTELSBERGHE DE LA POTERIE) <br> * Abbildungen * <br> --- | 1,2 | B60P3/03 |
| A | EP-A-0 332 434 (SECURITY SERVICES PLC) <br> * Spalte 2, Zeile 33 - Spalte 4, Zeile 25; Abbildungen * <br> --- | 3,4,5 | |
| A | EP-A-0 133 685 (AXYTEL) <br> * Seite 2, Zeile 21 - Seite 6, Zeile 23; Abbildungen * <br> --- | 6 | |
| A | FR-A-2 485 611 (GROUPE 1  PROTECTION) <br> * Anspruch 1; Abbildungen * <br> --- | 1 | |
| A | US-A-4 892 345 (RACHAEL) <br> * Zusammenfassung; Abbildungen * <br> --- | 1 | |
| A | FR-A-2 447 293 (BRINK'SFRANCE) <br> * Ansprüche; Abbildungen * | 1 | |
| | ----- | | **RECHERCHIERTE SACHGEBIETE (Int. Cl.5 )** <br><br> B60P |

Der vorliegende Recherchenbericht wurde für alle Patentansprüche erstellt

| Recherchenort | Abschlußdatum der Recherche | Prüfer |
|---|---|---|
| DEN HAAG | 11 FEBRUAR 1992 | VANNESTE M.A.R. |